# EUROPEAN PATENT SPECIFICATION

(11) **EP 3 796 310 B1**
(45) Date of publication and mention of the grant of the patent: **16.08.2023**
(21) Application number: 20197172.8
(22) Date of filing: 21.09.2020
(51) Int. Cl.: G10L 15/22, G06F 3/16, G10L 15/26, G10L 15/08

(54) **METHOD AND SYSTEM FOR CONTROLLING AND/OR COMMUNICATING WITH A DOMESTIC APPLIANCE BY MEANS OF VOICE COMMANDS AND TEXT DISPLAYS**
VERFAHREN UND SYSTEM ZUR STEUERUNG EINES HAUSHALTSGERÄTS UND/ODER KOMMUNIKATION MIT EINEM HAUSHALTSGERÄT ÜBER SPRACHBEFEHLE UND TEXTANZEIGEVORRICHTUNGEN
MÉTHODE ET SYSTÈME POUR COMMANDER ET/OU COMMUNIQUER AVEC UN APPAREIL DOMESTIQUE PAR L'INTERMÉDIAIRE DE COMMANDES VOCALES ET D'AFFICHAGES DE TEXTE

(30) Priority: 23.09.2019 IT 201900017000
(43) Date of publication of application: 24.03.2021
(73) Proprietor: Candy S.p.A., 20900 Monza (MB) (IT)
(72) Inventor: SERGI, Leonardo, 20900 Monza, MB (IT)
(74) Representative: Brunazzi, Stefano

(56) References cited:
- EP-A2- 3 413 304
- US-A1- 2017 004 828

## Description

### TECHNOLOGICAL BACKGROUND OF THE INVENTION

### Field of application.

The present invention generally relates to the technical field of voice control for domestic appliances.

In particular, the invention relates to a method and a system for controlling a domestic appliance and/or communicating with it by means of voice commands and providing displaying of text.

### Description of the prior art.

In the technical field of domestic appliances equipped with an advanced user interface, many solutions that allow the user to control the appliance and/or communicate with it by means of voice commands are known, for example from US 2017/004828 A1 and EP 3 413 304 A2.

Typically, voice communication is activated by means of a keyword or an activation word.

Once activated, the voice communication allows the user to interact with the appliance, e.g., to provide commands, by means of voice inputs from the user, which are appropriately recognized by various possible voice recognition technologies, known in themselves.

However, voice recognition, although being based on a technology now well developed, does not ensure in a certain manner that a command or a request is correctly interpreted, especially in the presence of articulated voice inputs that are not limited to predetermined command words.

For this reason, the user is usually allowed to check the reply provided by the control system based on voice input.

Nevertheless, in the considered technical field, the need is strongly felt to improve the guarantees of accuracy of the command by means of voice input, and in particular to provide the user with feedback as to whether the voice input, e.g., a request, or a command, or a question, was correctly interpreted.

In other words, the constant improvement of voice recognition techniques does not replace the need for the user to have feedback about the correct interpretation of the voice command or request.

Such requirement is not fully met by the solutions known to date.

### SUMMARY OF THE INVENTION

It is the object of the present invention to provide a method for controlling and/or communicating with a domestic appliance by means of voice command, which allows solving, at least in part, the drawbacks described above with reference to the prior art and responding to the aforesaid needs particularly felt in the considered technical sector. Such an object is achieved by a method according to claim 1.

Further embodiments of such a method are defined in claims 2-9.

It is a further object of the present invention to provide a system for controlling and/or communicating with a domestic appliance by means of voice command capable of implementing the aforesaid method. Such a system is defined in claim 10.

Further embodiments of the system are defined in claims 11-14.

The present invention further relates to a domestic appliance capable of being controlled by means of voice command according to the aforesaid method. Such a domestic appliance is defined in claim 15.

### BRIEF DESCRIPTION OF THE DRAWINGS

Further features and advantages of the method and system according to the invention will be apparent from the following description which illustrates preferred embodiments, given by way of indicative, non-limiting examples, with reference to the accompanying figure, in which:
- figures 1 and 2 illustrate, by means of respective simplified block charts, a system for controlling and/or communicating with a domestic appliance by voice command, according to two respective embodiments according to the invention;
- figure 3 illustrates an example of displaying of text provided in an embodiment of the system and the method according to the invention;
- figure 4 shows an embodiment of a domestic appliance according to the invention.

### DETAILED DESCRIPTION

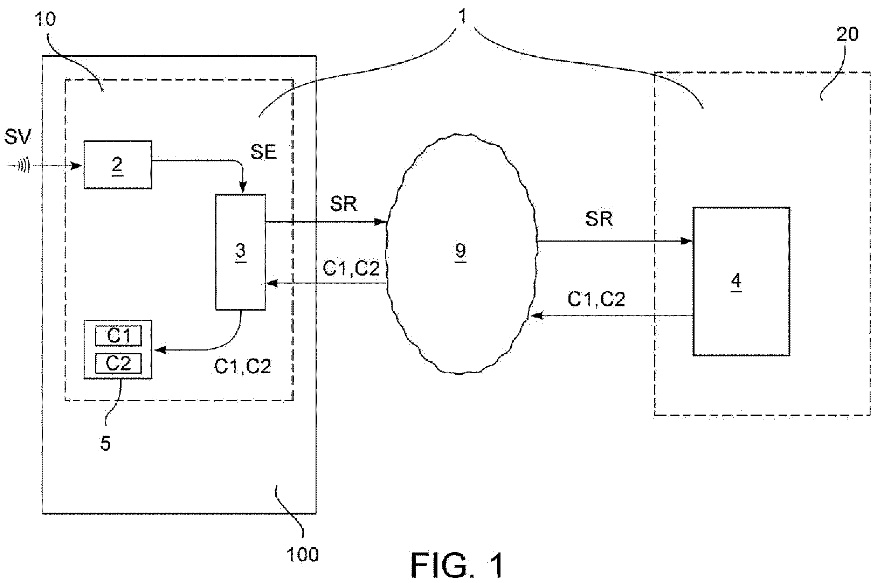

With reference to figure 1, a method for controlling and/or communicating with a domestic appliance 100 by voice command and text display is described.

Such a method comprises the steps of receiving an acoustic voice signal SV, corresponding to a voice query and/or request phrase uttered (i.e., pronounced) by a user and generating a corresponding first electric signal SE representative of the acoustic voice signal SV, by voice receiving means 2 integrated into the domestic appliance 100.

The method then provides generating a query and/or request electric signal SR, based on the aforesaid received first electric signal SE, representative of the acoustic voice signal SV, by the first processing means 3 integrated into the domestic appliance 100 operationally connected to the aforesaid voice receiving means 2. The method then provides transmitting said query and/or request electric signal SR to second processing means 4.

Then, the method comprises the step of processing the aforesaid query and/or request electric signal SR, by the second processing means 4, to identify a user query and/or request.

Such a user query and/or request, and thus the user's intention, can also be defined by the term *"utterance"* in the technical field considered here.

The method then provides the following steps by the second processing means 4: generating a first text character string C1 corresponding to the user query and/or request identified in the processing step; determining a reply to be provided to the user, based on the identified user query and/or request; and generating a second text character string C2 corresponding to the reply determined by the second processing means 4.

Finally, the method comprises the steps of transmitting the first text character string C1 and the second text character string C2 to the first processing means 3 of the domestic appliance; and of displaying both the first text character string C1 and the second text character string C2 by means of a visual interface 5 comprised in the domestic appliance 100, so that the user can read both the user query and/or request, as identified by the second processing means 4, and the reply determined by the second processing means 4.

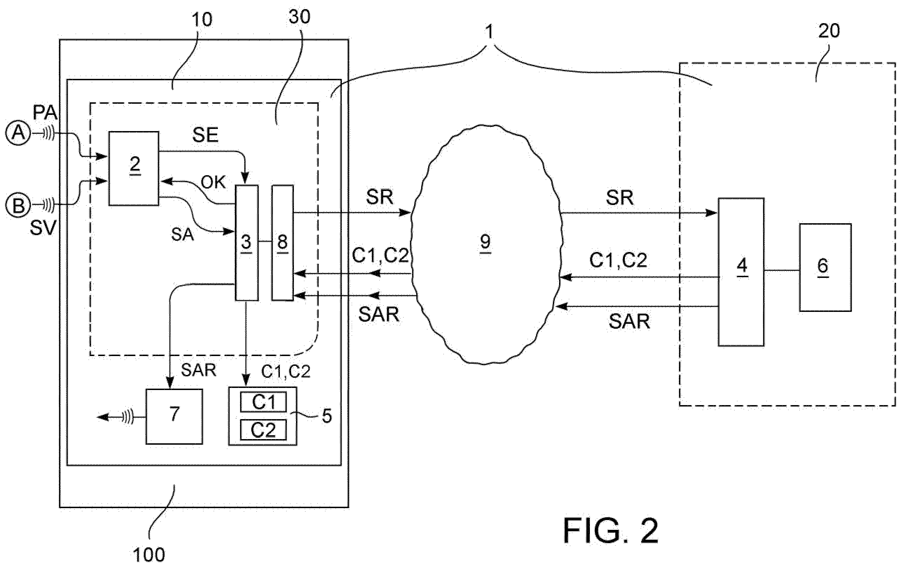

Further embodiments of the method are shown below again with reference to figure 2.

According to an embodiment, before the step of receiving a voice signal SV, the method comprises the steps of receiving an activation word PA uttered by the user, generating a respective activation word electric signal SA, by the voice receiving means 2 integrated in the domestic appliance, and recognizing the activation word by the first processing means 3.

In the case of a positive outcome of the activation word recognition, the method provides executing the aforesaid step of receiving an acoustic voice signal SV corresponding to a voice query and/or request phrase and the next steps described above.

Such sequence of steps is diagrammatically illustrated in figure 2, indicating the step of receiving the activation word as step "A" and the successive step of receiving of the acoustic voice signal corresponding to a query and/or request phrase as step "B".

According to an embodiment of the method, the step of generating a query and/or request electric signal SR comprises generating a respective query and/or request audio stream signal SR, representative of the acoustic voice signal SV. The audio stream form can be convenient for transmission and easy reception by the second processing media 4.

According to an implementation option of the method, the aforesaid step of generating a first text character string C1 comprises generating a text string corresponding exactly to the phrase uttered by the user, as identified by the second processing means 4.

According to an embodiment of the method, the aforesaid step of processing the query and/or request electric signal SR comprises recognizing whether the query and/or request is open or closed.

A query and/or request is recognized as closed if it corresponds to a determined query and/or request, such that the second processing means 4 can provide a predetermined unique reply relating to the query and/or request, based on information and/or states of the domestic appliance which are accessible to the second processing means 4.

A query and/or request is recognized as open in all the cases in which such query and/or request is not recognized as closed.

According to an implementation option of the method, if the query and/or request is recognized as closed, the step of identifying the user query and/or request comprises identifying the recognized closed query and/or request as a user query and/or request.

In such a case, the step of determining a reply to be provided to the user comprises determining said predetermined unique reply relating to the closed query and/or request as a reply.

According to an implementation option of the method, if the query and/or request is recognized as open, the step of identifying the user query and/or request comprises interpreting the open query and/or request as a partial query and/or request.

In such a case, the method comprises the further steps of determining and sending a holding reply comprising a request for further clarifications to the user; setting a waiting mode, designed to receive a further voice phrase to complete the request and/or query by the user; and simultaneously generating and then transmitting to the user a first text character string C1 corresponding to the partial query and/or request.

According to other possible implementation variants, if a request is recognized as open, the method provides identifying a standard query and/or request, considered similar to the open request, from a plurality of stored standard queries and/or requests, according to predefined similarity criteria, and identifying the identified standard query and/or request as the user query and/or request.

According to an embodiment of the method, the step of processing the query and/or user request electric signal SR, to identify a query and/or user request comprises interpreting the query and/or user request as a command and/or control action and/or question.

In such a case, the method further comprises the following steps.

If the user query and/or request is interpreted as a command, the method provides transmitting a command signal, corresponding to the command, to the first processing means 3 of the domestic appliance, by the second processing means 4.

If the user query and/or request is interpreted as a control action, the method provides consulting, by the second processing means 4, storage means 6 in which the state of the domestic appliance 100 is periodically stored, to define the action to be implemented and the mode of execution.

If the user query and/or request is interpreted as a pertinent question, such that the second processing means 4 are capable of providing a unique reply, generating such unique reply to the question, by the second processing means 4.

If the user query and/or request is interpreted as a non-pertinent question, such that the second processing means 4 cannot provide a unique reply, the method provides generating a holding reply for a request for further information, by the second processing means 4.

According to an embodiment of the method, the step of recognizing the activation word PA, by first processing means 3, and the step of processing the query and/or request electric signal SR, by the second processing means 4, comprise executing at least one voice recognition algorithm and/or procedure.

According to different possible options of implementation, the voice recognition algorithm and/or procedure is chosen from several possible types of speech recognition algorithms and/or procedure which are known in themselves.

According to an implementation option, procedures based on machine learning computational techniques are used.

According to an embodiment of the method, the step of generating a first text character string C1 and the step of generating a second text character string C2 comprise executing at least one algorithm and/or transformation procedure of a voice command to text.

According to several possible implementation options, the algorithm and/or transformation procedure of a voice command to text is chosen from various possible types of algorithms and/or transformation procedures of a voice command to text known in themselves.

According to an implementation option, procedures based on machine learning computational techniques are used to transform a text into a voice command.

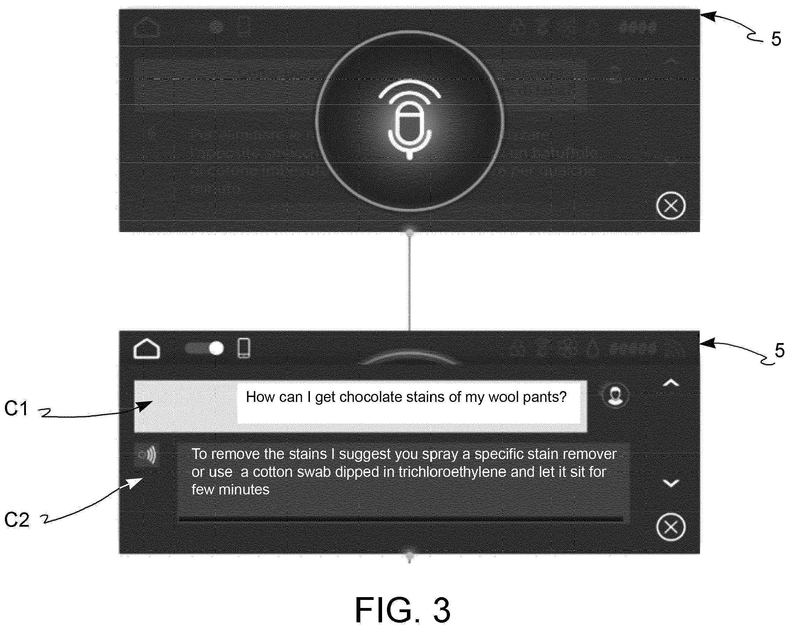

According to an embodiment of the method (shown for example in figure 3), the step of displaying the first string of characters of text characters and second string of text characters comprises displaying the first string of characters of text characters C1 and the second string of text character C2 as a pop-up, on a display 5 comprised in the domestic appliance.

According to an embodiment, the method comprises, after the step of determining a reply to the command and/or control action, the further steps of generating an audio reply signal SAR, corresponding to the reply determined by the second processing means 4; then, transmitting the aforesaid audio reply signal SAR to the first processing means 3 of the domestic appliance; finally, reproducing the audio reply signal SAR to generate a voice reply output by voice output generating means 7 comprised in the domestic appliance.

With reference to figure 1, a system 1 for controlling and/or interacting with a domestic appliance 100 by voice command, and providing text displaying, is described.

Such system 1 comprises voice receiving means 2 integrated into the domestic appliance 100, first processing means 3 integrated into the domestic appliance 100, a visual interface 5 comprised in the domestic appliance 100, and moreover second processing means 4.

The voice receiving means 2 integrated into the domestic appliance 100 are configured to receive an acoustic voice signal SV, corresponding to a voice query and/or request phrase uttered by the user, and transform it into a corresponding first electric signal SE representative of the acoustic voice signal SV.

The first integrated processing means 3 of the domestic appliance 100 are operationally connected to the aforesaid voice receiving means 2 to receive the aforesaid first electric signal SE.

The first processing means 3 are configured to generate a query and/or request electric signal SR based on the aforesaid first electric signal SE, representative of the acoustic voice signal SV.

The second processing means 4 are operationally connected to the first processing means 3.

The second processing means 4 are configured to receive the query and/or request electric signal SR from the first processing means 3, and process such query and/or request electric signal SR, to identify a user query and/or request; the second processing means 4 are further configured to generate a first text character string C1 corresponding to the user query and/or request identified in the processing step, determine a reply to be provided to the user, based on the identified user query and/or request, and generate a second text character string C2 corresponding to the determined reply; and transmit the aforesaid first text character string C1 and second text character string C2 to the first processing means 2 of the domestic appliance.

The visual interface 5 comprised in the domestic appliance 100 is operationally connected to the aforesaid first processing means 3.

The visual interface 5 is configured to display the aforesaid first text character string C1 and second text character string C2 so that the user can read both the user query and/or request, as identified by the second processing means 4, and the reply determined by the second processing means 4.

Figures 1 and 2 describe further embodiments of the system 1.

According to an embodiment of the system, the voice receiving means 2 are further configured to receive an activation word PA uttered by a user and generate a respective activation word electric signal SA.

The first processing means 3 are further configured to recognize the activation word, and in case of a positive outcome of the activation word recognition, to proceed to execute the aforesaid step of generating a query and/or request electric signal SR.

According to an embodiment of the system, the first processing means 3 are further configured to generate a query and/or request audio stream signal SR, representative of the acoustic voice signal SV, as the query and/or request electric signal SR.

According to different possible embodiments of the system, the first processing means 3 and the second processing means 4 are further configured to execute a method according to any of the embodiments illustrated above.

According to an embodiment of the system, the visual interface 5 comprises a display 5 integrated into the domestic appliance, and configured to display the first text character string C1 and the second text character string C2 in the form of pop-ups (e.g., as shown in figure 3).

According to an implementation example, the aforesaid display 5 comprises a liquid crystal display or other type of display known in itself, either already provided in the appliance or added to it to provide the visual interface function.

According to an implementation option, the visual interface 5 is configured to display a symbol indicating the step of listening or waiting to listen to the voice input by the user (as shown in the upper part of figure 3) or to display the pop-ups containing the question and the answer (as shown in the lower part of figure 3).

According to an embodiment of the system, the second processing means 4 are further configured to generate an audio stream reply signal SAR, corresponding to the determined reply, and to transmit said audio stream reply signal SAR to the first processing means 2.

In this case, the system 1 further comprises voice output generating means 7, integrated into the domestic appliance 100 and configured to reproduce the audio stream reply signal SAR for generating a voice reply output.

According to an implementation option, the voice receiving means 2 comprise one or more microphones.

According to an implementation option, the voice output generation means 7 comprises a speaker or other sound reproduction means 7 to provide the audio reply.

According to an implementation option, the first processing means 3 comprise one or more electronic processing circuits, and/or one or more electronic processors.

According to an implementation option, the system 1 further comprises reception/transmission means 8 configured to transmit said query or request electric signal SR.

According to an implementation option, the transmission (i.e., transceiver) means 8 are also configured to receive the aforesaid first text character string C1 and second text character string C2 and/or to receive the aforesaid audio reply signal SAR.

According to an embodiment of system 1, the aforesaid voice receiving means 2, first processing means 3 and transmission means 8 are integrated into a voice recognition module 30 incorporated in the domestic appliance 100.

According to an embodiment of the system 1, the second processing means 4 comprise one or more electronic processing circuits and/or one or more electronic processors, arranged remotely with respect to the domestic appliance 100.

In such case, the system 1 further comprises telecommunication means 9 configured to connect the transmission means 8 of the domestic appliance to the second processing means 4.

According to an implementation option, the second processing means 4 are implemented in a cloud infrastructure 20.

According to an implementation option, the telecommunication means 9 comprise wireless communication means, a router and a telecommunications infrastructure to the cloud infrastructure 20.

With reference to figures 1, 2 and 4, a domestic appliance 100 according to the invention is now described.

The domestic appliance 100 comprises a first portion 10 of a system 1 comprising at least the aforesaid voice receiving means 2, first processing means 3, and visual interface 5 (according to any one of the implementation options described above).

The domestic appliance 100 is operationally connected to a second portion 20 of a system 1 comprising at least the aforesaid second processing means 4 (according to any of the implementation options described above).

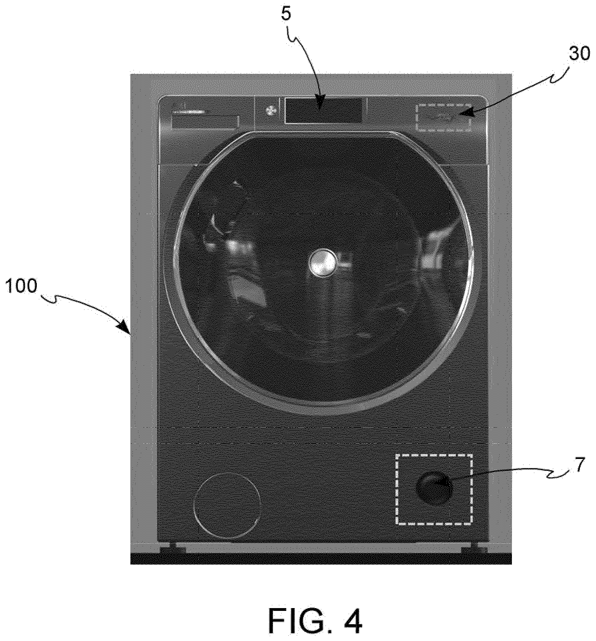

In the example shown in figure 4, the domestic appliance is a washing machine. Figure 4 shows the visual interface, i.e., the display 5, the voice recognition module 30, and the sound reproduction means 7.

It is worth noting that the object of the present invention is fully achieved by the method and system illustrated above by virtue of the functional and structural features thereof.

Indeed, the method and system for controlling and/or communicating with a domestic appliance, described above, can provide the user with a textual display, in the form of a text pop-up, of both the query and/or user request and the reply processed by the control system.

Therefore, such feature provides the user with precise feedback on how the voice-controlled control system interpreted the request and/or query, i.e., the user's utterance, allowing the user to fully control of the situation.

Such properties and capabilities of the method and system according to the invention are particularly useful in the presence of articulated voice inputs, and not limited to predefined command words.

A person skilled in the art may make changes and adaptations to the method and system described above or can replace elements with others which are functionally equivalent to satisfy contingent needs without departing from the scope of protection of the appended claims. All the features described above as belonging to one possible embodiment may be implemented independently from the other described embodiments.

## Claims

1. A method for controlling and/or communicating with a domestic appliance (100) by means of a voice command and providing text displaying, comprising the steps of:
- receiving an acoustic voice signal (SV), corresponding to a voice query and/or request phrase pronounced by a user, and generating a corresponding first electric signal (SE) representative of the acoustic voice signal (SV), by voice receiving means (2) integrated into the domestic appliance (100);
- generating a query and/or request electric signal (SR), based on said first electric signal (SE) received, representative of the acoustic voice signal (SV), by first processing means (3) integrated in the domestic appliance (10) and operatively connected to said voice receiving means (2);
- transmitting said query and/or request electric signal (SR) to second processing means (4);
- processing said query and/or request electric signal (SR), by the second processing means (4), to identify a user query and/or request;
- generating a first text character string (C1) corresponding to the user query and/or request identified in the processing step, by the second processing means;
- determining a reply to be provided to the user, based on the user query and/or request identified by the second processing means (4);
- generating a second text character string (C2) corresponding to the reply determined by the second processing means (4);
- transmitting said first text character string (C1) and said second text character string (C2) to the first processing means (3) of the domestic appliance;
- displaying both the first text character string (C1) and the second text character string (C2) by means of a visual interface (5) included in the domestic appliance (100), so that the user can read both the user query and/or request, as identified by the second processing means (4), and the reply determined by the second processing means (4);
wherein said step of processing the query and/or request electric signal (SR) comprises recognizing whether the query and/or request is open or closed,
wherein a query and/or request is recognized as closed if it corresponds to a determined query and/or request, such that the second processing means (4) are capable of providing a predetermined unique reply relating to the query and/or request, based on information and/or states of the domestic appliance which are accessible to the second processing means (4),
and wherein a query and/or request is recognized as open in all cases in which said query and/or request is not recognized as closed.

2. A method according to claim 1, comprising, before said step of receiving an acoustic voice signal (SV), the steps of:
- receiving an activation word (PA) pronounced by the user, and generating a respective activation word electric signal (SA), by said voice receiving means (2) integrated in the domestic appliance;
- carrying out a recognition of the activation word (PA) by said first processing means (3);
- in the case of a positive result of the activation word recognition, carrying out said step of receiving an acoustic voice signal (SV) corresponding to a voice query and/or request phrase and the next steps as defined in claim 1.

3. A method according to claim 1 or claim 2, wherein the step of generating a query and/or request electric signal (SR) comprises:
- generating a respective query and/or request audio stream signal (SR), representative of the acoustic voice signal (SV).

4. A method according to any one of the preceding claims, wherein said step of generating a first text character string (C1) comprises generating a text string exactly corresponding to the phrase pronounced by the user, as identified by the second processing means (4).

5. A method according to claim 1, wherein:
if the query and/or request is closed:
- the step of identifying the user query and/or request comprises identifying, as a user query and/or request, the recognized closed query and/or request;
- the step of determining a reply to be provided to the user comprises determining, as a reply, said predetermined unique reply relating to the closed query and/or request;
if the query and/or request is open:
- the step of identifying the user query and/or request comprises interpreting the open query and/or request as a partial query and/or request,
and the method comprises the further steps of:
- determining and sending a holding reply to the user, comprising a request for further clarifications;
- setting a waiting mode, designed to receive a further voice phrase to complete the request and/or query by the user;
- simultaneously generating and then transmitting to the user a first text character string (C1) corresponding to the partial query and/or request.

6. A method according to any one of the preceding claims, wherein the step of processing the query and/or request electric signal (SR), for identifying a user query and/or request comprises:
- interpreting the user query and/or request as a command and/or a control action and/or a question;
and wherein the method further comprises the steps of:
if the user query and/or request is interpreted as a command, transmitting a command signal corresponding to the command to the first processing means (3) of the domestic appliance by the second processing means (4);
if the user query and/or request is interpreted as a control action, consulting, by the second processing means (4), storage means (6) in which the state of the domestic appliance (100) is periodically stored, to define the action to be implemented and the mode of execution;
if the user query and/or request is interpreted as a pertinent question, such that the second processing means (4) are capable of providing a unique reply, generating said unique reply to the question, by the second processing means (4);
if the user query and/or request is interpreted as a non-pertinent question, such that the second processing means (4) are not capable of providing a unique reply, generating a holding reply for a request for further information, by the second processing means (4).

7. A method according to claim 2, wherein the step of carrying out a recognition of the activation word, by first processing means (3), and the step of processing the query and/or request electric signal (SR), by the second processing means (4), comprise performing at least one voice recognition algorithm and/or procedure, and/or wherein:
the step of generating a first text character string (C1) and the step of generating a second text character string (C2) comprise performing at least one algorithm and/or procedure for transforming a voice command into text.

8. A method according to any one of the preceding claims, wherein the step of displaying the first text character string and the second text character string comprises:
displaying the first text character string (C1) and the second text character string (C2) as pop-ups, on a display (5) included in the domestic appliance.

9. A method according to any one of the preceding claims, comprising, after the step of determining a reply to the command and/or control action, the further steps of:
- generating an audio reply signal (SAR), corresponding to the reply determined by the second processing means (4);
- transmitting said audio reply signal (SAR) to the first processing means (3) of the domestic appliance;
- reproducing the audio reply signal (SAR) for generating a voice reply output by voice output generating means (7) included in the domestic appliance.

10. A system (1) for controlling and/or interacting with a domestic appliance (100) by means of voice control and providing text displaying, comprising:
- voice receiving means (2) integrated in the domestic appliance (100), configured to receive an acoustic voice signal (SV), corresponding to a voice query and/or request phrase pronounced by the user, and transform it into a corresponding first electric signal (SE) representative of the acoustic voice signal (SV);
- first processing means (3) integrated in the domestic appliance (100) and operatively connected to said voice receiving means (2) to receive said first electric signal (SE), said first processing means (3) being configured to:
generate a query and/or request electric signal (SR) based on said first electric signal (SE), representative of the acoustic voice signal (SV);
- second processing means (4), operatively connected to said first processing means (3), said second processing means (4) being configured to:
receive, from the first processing means (3), said query and/or request electric signal (SR);
process said query and/or request electric signal (SR), to identify a user query and/or request, wherein said step of processing the query and/or request electric signal (SR) comprises recognizing whether the query and/or request is open or closed, wherein a query and/or request is recognized as closed if it corresponds to a determined query and/or request, such that the second processing means (4) are capable of providing a predetermined unique reply relating to the query and/or request, based on information and/or states of the domestic appliance which are accessible to the second processing means (4), and wherein a query and/or request is recognized as open in all cases in which said query and/or request is not recognized as closed;
generate a first text character string (C1) corresponding to the user query and/or request identified in the processing step;
determine a reply to be provided to the user, based on the user query and/or request identified, and generate a second text character string (C2) corresponding to the reply determined;
- transmit said first text character string (C1) and second text character string (C2) to the first processing means (2) of the domestic appliance;
- a visual interface (5) included in the domestic appliance (100), operatively connected to said first processing means (3), said visual interface (5) being configured to display said first text character string (C1) and second text character string (C2), so that the user can read both the user query and/or request, as identified by the second processing means (4), and the reply determined by the second processing means (4).

11. A system (1) according to claim 10, wherein the first processing means (3) and the second processing means (4) are further configured to carry out a method according to any of the claims 2-9.

12. A system (1) according to any one of the claims 10-11, wherein the visual interface (5) comprises a display (5) integrated in the domestic appliance configured to display the first text character string (C1) and the second text character string (C2) in the form of pop-ups,
and wherein the second processing means (4) are further configured to generate an audio stream reply signal (SAR), corresponding to the reply determined, and transmit said audio stream reply signal (SAR) to the first processing means (2); wherein the system (1) further comprises voice output generating means (7), integrated in the domestic appliance (100) and configured to reproduce the audio stream reply signal (SAR) for generating a voice reply output.

13. A system according to any one of the claims 10-12, wherein:
- the voice receiving means (2) comprise one or more microphones;
- the first processing means (3) comprise one or more electronic processing circuits, and/or one or more electronic processors;
and wherein the system (1) further comprises transceiver means (8) configured to transmit said query or request electric signal (SR), wherein said voice receiving means (2), said first processing means (3) and said transmission means (8) are integrated in a voice recognition module (30) incorporated in the domestic appliance (100).

14. A system (1) according to any one of the claims 10-13, wherein the second processing means (4) comprise one or more electronic processing circuits, and/or one or more electronic processors, arranged remotely with respect to the domestic appliance (100),
and wherein the system (1) further comprises telecommunication means (9) configured to connect the transmission means (8) of the domestic appliance to the second processing means (4), wherein the second processing means (4) are provided in a cloud infrastructure (20), and wherein the telecommunication means (9) comprise wireless communication means, a router and a telecommunications infrastructure towards the cloud infrastructure (20).

15. A domestic appliance (100) comprising a first portion (10) of a system (1) according to any one of the claims 10-14, comprising at least said voice receiving means (2), first processing means (3) and a visual interface (5),
said domestic appliance (100) being operatively connected to a second portion (20) of a system (1) according to any one of the claims 10-14 comprising at least said second processing means (4).

## Patentansprüche

1. Verfahren zum Steuern eines Haushaltsgeräts (100) und/oder Kommunizieren mit einem Haushaltgerät (100) mittels eines Sprachbefehls und eines Bereitstellens von Textanzeige, umfassend die folgenden Schritte:
- Empfangen eines akustischen Sprachsignals (SV) entsprechend einem durch einen Benutzer ausgesprochenen Sprachabfrage- und/oder anfrageausdruck und Generieren eines entsprechenden ersten elektrischen Signals (SE), welches für das akustische Sprachsignal (SV) repräsentativ ist, durch Sprachempfangsmittel (2), welche in das Haushaltsgerät (100) integriert sind;
- Generieren eines elektrischen Abfrage- und/oder Anfragesignals (SR) auf Grundlage des empfangenen ersten elektrischen Signals (SE), welches für das akustische Sprachsignal (SV) repräsentativ ist, durch erste Verarbeitungsmittel (3), welche in das Haushaltsgerät (10) integriert sind und betriebsmäßig mit den Sprachempfangsmitteln (2) verbunden sind;
- Übertragen des elektrischen Abfrage- und/oder Anfragesignals (SR) an zweite Verarbeitungsmittel (4);
- Verarbeiten des elektrischen Abfrage- und/oder Anfragesignals (SR) durch die zweiten Verarbeitungsmittel (4), um eine Benutzerabfrage und/oder - anfrage zu identifizieren;
- Generieren einer ersten Textzeichenfolge (C1) entsprechend der in dem Verarbeitungsschritt identifizierten Benutzerabfrage und/oder -anfrage durch die zweiten Verarbeitungsmittel;
- Bestimmen einer dem Benutzer bereitzustellenden Antwort auf Grundlage der durch die zweiten Verarbeitungsmittel (4) identifizierten Benutzerabfrage und/oder -anfrage;
- Generieren einer zweiten Textzeichenfolge (C2) entsprechend der bestimmten Antwort durch die zweiten Verarbeitungsmittel (4);
- Übertragen der ersten Textzeichenfolge (C1) und der zweiten Textzeichenfolge (C2) an die ersten Verarbeitungsmittel (3) des Haushaltsgeräts;
- Anzeigen sowohl der ersten Textzeichenfolge (C1) als auch der zweiten Textzeichenfolge (C2) mittels einer in dem Haushaltsgerät (100) umfassten visuellen Schnittstelle (5), so dass der Benutzer sowohl die benutzerabfrage und/oder -anfrage, wie durch die zweiten Verarbeitungsmittel (4) identifiziert, als auch die durch die zweiten Verarbeitungsmittel (4) bestimmte Antwort lesen kann;
wobei der Schritt des Verarbeitens des elektrischen Abfrage- und/oder Anfragesignals (SR) ein Erkennen umfasst, ob die Abfrage und/oder Anfrage offen oder geschlossen ist,
wobei eine Abfrage und/oder Anfrage als geschlossen erkannt wird, wenn sie einer bestimmten Abfrage und/oder Anfrage entspricht, so dass die zweiten Verarbeitungsmittel (4) dazu in der Lage sind, auf Grundlage von Informationen und/oder Zuständen des Haushaltsgeräts, auf welche die zweiten Verarbeitungsmittel (4) zugreifen können, eine vorbestimmte eindeutige Antwort in Bezug auf die Abfrage und/oder Anfrage bereitzustellen,
und wobei eine Abfrage und/oder Anfrage in allen Fällen als offen erkannt wird, in welchen die Abfrage und/oder Anfrage nicht als geschlossen erkannt wird.

2. Verfahren nach Anspruch 1, umfassend, vor dem Schritt des Empfangens eines akustischen Sprachsignals (SV), die folgenden Schritte:
- Empfangen eines durch den Benutzer ausgesprochenen Aktivierungsworts (PA) und Generieren eines jeweiligen elektrischen Aktivierungswortsignals (SA) durch die in das Haushaltsgerät integrierten Sprachempfangsmittel (2);
- Ausführen einer Erkennung des Aktivierungsworts (PA) durch die ersten Verarbeitungsmittel (3);
- in dem Fall eines positiven Ergebnisses der Aktivierungsworterkennung, Ausführen des Schritts des Empfangens eines akustischen Sprachsignals (SV) entsprechend einem Sprachabfrage- und/oder anfrageausdruck und der nächsten Schritte wie in Anspruch 1 definiert.

3. Verfahren nach Anspruch 1 oder Anspruch 2, wobei der Schritt des Generierens eines elektrischen Abfrage- und/oder Anfragesignals (SR) umfasst:
- Generieren eines jeweiligen Abfrage- und/oder Anfrage-Audiostream-Signals (SR), welches für das akustische Sprachsignal (SV) repräsentativ ist.

4. Verfahren nach einem der vorhergehenden Ansprüche, wobei der Schritt des Generierens einer ersten Textzeichenfolge (C1) ein Generieren einer Textzeichenfolge umfasst, welche exakt dem durch den Benutzer ausgesprochenen Ausdruck, wie durch die zweiten Verarbeitungsmittel (4) identifiziert, entspricht.

5. Verfahren nach Anspruch 1, wobei:
wenn die Abfrage und/oder Anfrage geschlossen ist:
- der Schritt des Identifizierens der Benutzerabfrage und/oder -anfrage ein Identifizieren der erkannten geschlossenen Abfrage und/oder Anfrage als eine Benutzerabfrage und/oder -anfrage umfasst;
- der Schritt des Bestimmens einer dem Benutzer bereitzustellenden Antwort ein Bestimmen der vorbestimmten eindeutigen Antwort in Bezug auf die geschlossene Abfrage und/oder Anfrage als eine Antwort umfasst,
wenn die Abfrage und/oder Anfrage offen ist:
- der Schritt des Identifizierens der Benutzerabfrage und/oder -anfrage ein Interpretieren der offenen Abfrage und/oder Anfrage als eine Teilabfrage und/oder -anfrage umfasst,
und wobei das Verfahren die folgenden weiteren Schritte umfasst:
- Bestimmen und Senden einer vorläufigen Antwort an den Benutzer, welche eine Anfrage für weitere Klarstellungen umfasst;
- Festlegen eines Wartemodus, welcher dafür ausgelegt ist, einen weiteren Sprachausdruck zu empfangen, um die Abfrage und/oder Anfrage durch den Benutzer zu vervollständigen;
- gleichzeitig Generieren und dann Übertragen an den Benutzer einer ersten Textzeichenfolge (C1) entsprechend der Teilabfrage und/oder -anfrage.

6. Verfahren nach einem der vorhergehenden Ansprüche, wobei der Schritt des Verarbeitens des elektrischen Abfrage- und/oder Anfragesignals (SR) zum Identifizieren einer Benutzerabfrage und/oder -anfrage umfasst:
- Interpretieren der Benutzerabfrage und/oder -anfrage als einen Befehl und/oder eine Steueraktion und/oder eine Frage;
und wobei das Verfahren ferner die folgenden Schritte umfasst:
wenn die Benutzerabfrage und/oder -anfrage als ein Befehl interpretiert wird, Übertragen eines Befehlssignals entsprechend dem Befehl an die ersten Verarbeitungsmittel (3) des Haushaltsgeräts durch die zweiten Verarbeitungsmittel (4);
wenn die Benutzerabfrage und/oder -anfrage als eine Steueraktion interpretiert wird, Konsultieren, durch die zweiten Verarbeitungsmittel (4), von Speichermitteln (6), in welchen der Zustand des Haushaltsgeräts (100) periodisch gespeichert wird, um die zu implementierende Aktion und den Modus einer Ausführung zu definieren;
wenn die Benutzerabfrage und/oder -anfrage als eine relevante Frage interpretiert wird, so dass die zweiten Verarbeitungsmittel (4) dazu in der Lage sind, eine eindeutige Antwort bereitzustellen, Generieren der eindeutigen Antwort auf die Frage durch die zweiten Verarbeitungsmittel (4);
wenn die Benutzerabfrage und/oder -anfrage als eine nicht relevante Frage interpretiert wird, so dass die zweiten Verarbeitungsmittel (4) nicht dazu in der Lage sind, eine eindeutige Antwort bereitzustellen, Generieren einer vorläufigen Antwort für eine Anfrage für weitere Informationen durch die zweiten Verarbeitungsmittel (4).

7. Verfahren nach Anspruch 2, wobei der Schritt des Ausführens einer Erkennung des Aktivierungsworts durch die ersten Verarbeitungsmittel (3) und der Schritt des Verarbeitens des elektrischen Abfrage- und/oder Anfragesignals (SR) durch die zweiten Verarbeitungsmittel (4) ein Durchführen wenigstens eines Spracherkennungsalgorithmus und/oder wenigstens einer Spracherkennungsprozedur umfassen und/oder wobei:
der Schritt des Generierens einer ersten Textzeichenfolge (C1) und der Schritt des Generierens einer zweiten Textzeichenfolge (C2) ein Durchführen wenigstens eines Algorithmus und/oder wenigstens einer Prozedur zum Umwandeln eines Sprachbefehls in Text umfassen.

8. Verfahren nach einem der vorhergehenden Ansprüche, wobei der Schritt des Anzeigens der ersten Textzeichenfolge und der zweiten Textzeichenfolge umfasst:
Anzeigen der ersten Textzeichenfolge (C1) und der zweiten Textzeichenfolge (C2) als Pop-Ups auf einer in dem Haushaltsgerät umfassten Anzeige (5).

9. Verfahren nach einem der vorhergehenden Ansprüche, umfassend, nach dem Schritt des Bestimmens einer Antwort auf den Befehl und/oder die Steueraktion, die folgenden weiteren Schritte:
- Generieren eines Audioantwortsignals (SAR) entsprechend der durch die zweiten Verarbeitungsmittel (4) bestimmten Antwort;
- Übertragen des Audioantwortsignals (SAR) an die ersten Verarbeitungsmittel (3) des Haushaltsgeräts;
- Reproduzieren des Audioantwortsignals (SAR) zum Generieren einer Sprachantwortausgabe durch in dem Haushaltsgerät umfasste Sprachausgabegenerierungsmittel (7).

10. System (1) zum Steuern eines Haushaltsgeräts (100) und/oder Interagieren mit einem Haushaltsgerät mittels eines Sprachbefehls und eines Bereitstellens von Textanzeige, umfassend:
- in das Haushaltsgerät (100) integrierte Sprachempfangsmittel (2), welche dazu eingerichtet sind, ein akustisches Sprachsignal (SV) zu empfangen, welches einem durch den Benutzer ausgesprochenen Sprachabfrage- und/oder anfrageausdruck entspricht, und es in ein entsprechendes erstes elektrisches Signal (SE) umzuwandeln, welches für das akustische Sprachsignal (SV) repräsentativ ist;
- erste Verarbeitungsmittel (3), welche in das Haushaltsgerät (100) integriert sind und betriebsmäßig mit den Sprachempfangsmitteln (2) verbunden sind, um das erste elektrische Signal (SE) zu empfangen, wobei die ersten Verarbeitungsmittel (3) eingerichtet sind zum:
Generieren eines elektrischen Abfrage- und/oder Anfragesignals (SR) auf Grundlage des ersten elektrischen Signals (SE), welches für das akustische Sprachsignal (SV) repräsentativ ist;
- zweite Verarbeitungsmittel (4), welche betriebsmäßig mit den ersten Verarbeitungsmitteln (3) verbunden sind, wobei die zweiten Verarbeitungsmittel (4) eingerichtet sind zum:
Empfangen, von den ersten Verarbeitungsmitteln (3), des elektrischen Abfrage- und/oder Anfragesignals (SR);
Verarbeiten des elektrischen Abfrage- und/oder Anfragesignals (SR), um eine Benutzerabfrage und/oder -anfrage zu identifizieren, wobei der Schritt des Verarbeitens des elektrischen Abfrage- und/oder Anfragesignals (SR) ein Erkennen umfasst, ob die Abfrage und/oder Anfrage offen oder geschlossen ist, wobei eine Abfrage und/oder Anfrage als geschlossen erkannt wird, wenn sie einer bestimmten Abfrage und/oder Anfrage entspricht, so dass die zweiten Verarbeitungsmittel (4) dazu in der Lage sind, auf Grundlage von Informationen und/oder Zuständen des Haushaltsgeräts, auf welche die zweiten Verarbeitungsmittel (4) zugreifen können, eine vorbestimmte eindeutige Antwort in Bezug auf die Abfrage und/oder Anfrage bereitzustellen, und wobei eine Abfrage und/oder Anfrage in allen Fällen als offen erkannt wird, in welchen die Abfrage und/oder Anfrage nicht als geschlossen erkannt wird;
Generieren einer ersten Textzeichenfolge (C1) entsprechend der in dem Verarbeitungsschritt identifizierten Benutzerabfrage und/oder -anfrage;
Bestimmen einer dem Benutzer bereitzustellenden Antwort auf Grundlage der identifizierten Benutzerabfrage und/oder -anfrage und Generieren einer zweiten Textzeichenfolge (C2) entsprechend der bestimmten Antwort;
Übertragen der ersten Textzeichenfolge (C1) und der zweiten Textzeichenfolge (C2) an die ersten Verarbeitungsmittel (2) des Haushaltsgeräts;
- eine in dem Haushaltsgerät (100) umfasste visuelle Schnittstelle (5), welche betriebsmäßig mit den ersten Verarbeitungsmitteln (3) verbunden ist, wobei die visuelle Schnittstelle (5) dazu eingerichtet ist, die erste Textzeichenfolge (C1) und die zweite Textzeichenfolge (C2) anzuzeigen, so dass der Benutzer sowohl die Benutzerabfrage und/oder -anfrage, wie durch die zweiten Verarbeitungsmittel (4) identifiziert, als auch die durch die zweiten Verarbeitungsmittel (4) bestimmte Antwort lesen kann.

11. System (1) nach Anspruch 10, wobei die ersten Verarbeitungsmittel (3) und die zweiten Verarbeitungsmittel (4) ferner dazu eingerichtet sind, ein Verfahren nach einem der Ansprüche 2-9 auszuführen.

12. System (1) nach einem der Ansprüche 10-11, wobei die visuelle Schnittstelle (5) eine in das Haushaltsgerät integrierte Anzeige (5) umfasst, welche dazu eingerichtet ist, die erste Textzeichenfolge (C1) und die zweite Textzeichenfolge (C2) in der Form von Pop-Ups anzuzeigen,
und wobei die zweiten Verarbeitungsmittel (4) ferner dazu eingerichtet sind, ein Audiostream-Antwortsignal (SAR) zu generieren, welches der bestimmten Antwort entspricht, und das Audiostream-Antwortsignal (SAR) an die ersten Verarbeitungsmittel (2) zu übertragen; wobei das System (1) ferner Sprachausgabegenerierungsmittel (7) umfasst, welche in das Haushaltsgerät (100) integriert sind und dazu eingerichtet sind, das Audiostream-Antwortsignal (SAR) zum Generieren einer Sprachantwortausgabe zu reproduzieren.

13. System (1) nach einem der Ansprüche 10-12, wobei:
- die Sprachempfangsmittel (2) ein oder mehrere Mikrophone umfassen;
- die ersten Verarbeitungsmittel (3) eine oder mehrere elektronische Verarbeitungsschaltungen und einen oder mehrere elektronische Prozessoren umfassen;
und wobei das System (1) ferner Transceiver-Mittel (8) umfasst, welche dazu eingerichtet sind, das elektrische Abfrage- und/oder Anfragesignal (SR) zu übertragen, wobei die Sprachempfangsmittel (2), die ersten Verarbeitungsmittel (3) und die Übertragungsmittel (8) in ein Spracherkennungsmodul (30) integriert sind, welches in dem Haushaltsgerät (100) aufgenommen ist.

14. System (1) nach einem der Ansprüche 10-13, wobei die zweiten Verarbeitungsmittel (4) eine oder mehrere elektronische Verarbeitungsschaltungen und/oder einen oder mehrere elektronische Prozessoren umfassen, welche entfernt in Bezug auf das Haushaltsgerät (100) angeordnet sind,
und wobei das System (1) ferner Telekommunikationsmittel (9) umfasst, welche dazu eingerichtet sind, die Übertragungsmittel (8) des Haushaltsgeräts mit den zweiten Verarbeitungsmitteln (4) zu verbinden, wobei die zweiten Verarbeitungsmittel (4) in einer Cloud-Infrastruktur (20) bereitgestellt sind und wobei die Telekommunikationsmittel (9) drahtlose Kommunikationsmittel, einen Router und eine Telekommunikationsinfrastruktur zu der Cloud-Infrastruktur (20) umfassen.

15. Haushaltsgerät (100), umfassend einen ersten Abschnitt (10) eines Systems (1) nach einem der Ansprüche 10-14, welcher wenigstens die Sprachempfangsmittel (2), die ersten Verarbeitungsmittel (3) und eine visuelle Schnittstelle (5) umfasst,
wobei das Haushaltsgerät (100) betriebsmäßig mit einem zweiten Abschnitt (20) eines Systems (1) nach einem der Ansprüche 10-14 verbunden ist, welcher wenigstens die zweiten Verarbeitungsmittel (4) umfasst.

## Revendications

1. Méthode pour commander et/ou communiquer avec un appareil domestique (100) par l'intermédiaire d'une commande vocale et pour fournir un affichage de texte, comprenant les étapes suivantes :
- la réception d'un signal vocal (SV) acoustique, correspondant à une expression vocale d'interrogation et/ou demande prononcée par un utilisateur, et la génération d'un premier signal électrique (SE) correspondant représentatif du signal vocal (SV) acoustique, par des moyens de réception vocale (2) intégrés à l'appareil domestique (100) ;
- la génération d'un signal électrique d'interrogation et/ou demande (SR), sur la base dudit signal électrique (SE) reçu, représentatif du signal vocal (SV) acoustique, par des premiers moyens de traitement (3) intégrés à l'appareil domestique (10) et connectés fonctionnellement auxdits moyens de réception vocale (2) ;
- la transmission dudit signal électrique d'interrogation et/ou demande (SR) à des seconds moyens de traitement (4) ;
- le traitement dudit signal électrique d'interrogation et/ou demande (SR), par les seconds moyens de traitement (4), pour identifier une interrogation et/ou demande d'utilisateur ;
- la génération d'une première chaîne de caractères de texte (C1) correspondant à l'interrogation et/ou demande d'utilisateur identifiée à l'étape de traitement, par les seconds moyens de traitement ;
- la détermination d'une réponse à fournir à l'utilisateur, sur la base de l'interrogation et/ou demande d'utilisateur identifiée par les seconds moyens de traitement (4) ;
- la génération d'une seconde chaîne de caractères de texte (C2) correspondant à la réponse déterminée par les seconds moyens de traitement (4) ;
- la transmission de ladite première chaîne de caractères de texte (C1) et de ladite seconde chaîne de caractères de texte (C2) aux premiers moyens de traitement (3) de l'appareil domestique ;
- l'affichage à la fois de la première chaîne de caractères de texte (C1) et de la seconde chaîne de caractères de texte (C2) par l'intermédiaire d'une interface visuelle (5) incluse dans l'appareil domestique (100), de sorte que l'utilisateur puisse lire à la fois l'interrogation et/ou demande d'utilisateur, telle qu'identifiée par les seconds moyens de traitement (4), et la réponse déterminée par les seconds moyens de traitement (4) ;
dans laquelle ladite étape du traitement du signal électrique d'interrogation et/ou demande (SR) comprend la reconnaissance si l'interrogation et/ou demande est ouverte ou fermée,
dans laquelle une interrogation et/ou demande est reconnue comme étant fermée si elle correspond à une interrogation et/ou demande déterminée, de sorte que les seconds moyens de traitement (4) soient capables de fournir une réponse unique prédéterminée relative à l'interrogation et/ou demande, sur la base d'informations et/ou d'états de l'appareil domestique qui sont accessibles par les seconds moyens de traitement (4),
et dans laquelle une interrogation et/ou demande est reconnue comme étant ouverte dans tous les cas dans lesquels ladite interrogation et/ou demande n'est pas reconnue comme étant fermée.

2. Méthode selon la revendication 1, comprenant, avant ladite étape de la réception d'un signal vocal (SV) acoustique, les étapes suivantes :
- la réception d'un mot d'activation (PA) prononcé par l'utilisateur, et la génération d'un signal électrique de mot d'activation (SA) respectif, par lesdits moyens de réception vocale (2) intégrés à l'appareil domestique ;
- la mise en oeuvre d'une reconnaissance du mot d'activation (PA) par lesdits premiers moyens de traitement (3) ;
- dans le cas d'un résultat positif de la reconnaissance de mot d'activation, la mise en oeuvre de ladite étape de la réception d'un signal vocal (SV) acoustique correspondant à une expression d'interrogation et/ou demande vocale et les étapes suivantes selon la revendication 1.

3. Méthode selon la revendication 1 ou 2, dans laquelle l'étape de la génération d'un signal électrique d'interrogation et/ou demande (SR) comprend :
- la génération d'un signal de flux audio d'interrogation et/ou demande (SR) respectif, représentatif du signal vocal (SV) acoustique.

4. Méthode selon l'une quelconque des revendications précédentes, dans laquelle ladite étape de la génération d'une première chaîne de caractères de texte (C1) comprend la génération d'une chaîne de texte correspondant exactement à l'expression prononcée par l'utilisateur, telle qu'identifiée par les seconds moyens de traitement (4).

5. Méthode selon la revendication 1, dans laquelle :
si l'interrogation et/ou demande est fermée :
- l'étape de l'identification de l'interrogation et/ou demande d'utilisateur comprend l'identification, en tant qu'une interrogation et/ou demande d'utilisateur, de l'interrogation et/ou demande fermée reconnue ;
- l'étape de la détermination d'une réponse à fournir à l'utilisateur comprend la détermination, en tant qu'une réponse, de ladite réponse unique prédéterminée relative à l'interrogation et/ou demande fermée ;
si l'interrogation et/ou demande est ouverte :
- l'étape de l'identification de l'interrogation et/ou demande d'utilisateur comprend l'interprétation de l'interrogation et/ou demande ouverte en tant qu'une interrogation et/ou demande partielle,
et la méthode comprend les étapes supplémentaires suivantes :
- la détermination et l'envoi d'une réponse provisoire à l'utilisateur, comprenant une demande de précisions supplémentaires ;
- le réglage d'un mode d'attente, conçu pour recevoir une autre expression vocale pour compléter la demande et/ou interrogation par l'utilisateur ;
- simultanément la génération puis la transmission à l'utilisateur d'une première chaîne de caractères de texte (C1) correspondant à l'interrogation et/ou demande partielle.

6. Méthode selon l'une quelconque des revendications précédentes, dans laquelle l'étape du traitement du signal électrique d'interrogation et/ou demande (SR), pour l'identification d'une interrogation et/ou demande d'utilisateur, comprend :
- l'interprétation de l'interrogation et/ou demande d'utilisateur en tant qu'une instruction et/ou une action de commande et/ou une question ;
et dans laquelle la méthode comprend en outre les étapes suivantes :
si l'interrogation et/ou demande d'utilisateur est interprétée comme étant une instruction, la transmission d'un signal d'instruction correspondant à l'instruction aux premiers moyens de traitement (3) de l'appareil domestique par les seconds moyens de traitement (4) ;
- si l'interrogation et/ou demande d'utilisateur est interprétée comme étant une action de commande, la consultation, par les seconds moyens de traitement (4), de moyens de stockage (6) dans lesquels l'état de l'appareil domestique (100) est périodiquement stocké, pour définir l'action à mettre en oeuvre et le mode d'exécution ;
si l'interrogation et/ou demande d'utilisateur est interprétée comme étant une question pertinente, de sorte que les seconds moyens de traitement (4) soient capables de fournir une réponse unique, la génération de ladite réponse unique à la question, par les seconds moyens de traitement (4) ;
si l'interrogation et/ou demande d'utilisateur est interprétée comme étant une question non pertinente, de sorte que les seconds moyens de traitement (4) ne soient pas capables de fournir une réponse unique, la génération d'une réponse provisoire pour une demande d'informations complémentaires, par les seconds moyens de traitement (4).

7. Méthode selon la revendication 2, dans laquelle l'étape de la mise en oeuvre d'une reconnaissance du mot d'activation, par les premiers moyens de traitement (3), et l'étape du traitement du signal électrique d'interrogation et/ou demande (SR), par les seconds moyens de traitement (4), comprennent la mise en oeuvre d'au moins un algorithme et/ou procédure de reconnaissance vocale, et/ou dans laquelle :
l'étape de la génération d'une première chaîne de caractères de texte (C1) et l'étape de la génération d'une seconde chaîne de caractères de texte (C2) comprennent la mise en oeuvre d'au moins un algorithme et/ou procédure pour transformer une commande vocale en texte.

8. Méthode selon l'une quelconque des revendications précédentes, dans laquelle l'étape de l'affichage de la première chaîne de caractères de texte et de la seconde chaîne de caractères de texte comprend :
l'affichage de la première chaîne de caractères de texte (C1) et de la seconde chaîne de caractères de texte (C2) sous forme de fenêtres contextuelles, sur un affichage (5) inclus dans l'appareil domestique.

9. Méthode selon l'une quelconque des revendications précédentes, comprenant, après l'étape de la détermination d'une réponse à l'instruction et/ou action de commande, les étapes supplémentaires suivantes :
- la génération d'un signal de réponse audio (SAR), correspondant à la réponse déterminée par les seconds moyens de traitement (4) ;
- la transmission dudit signal de réponse audio (SAR) aux premiers moyens de traitement (3) de l'appareil domestique ;
- la reproduction du signal de réponse audio (SAR) pour générer une sortie de réponse vocale par des moyens de génération de sortie vocale (7) inclus dans l'appareil domestique.

10. Système (1) pour commander et/ou interagir avec un appareil domestique (100) par l'intermédiaire d'une commande vocale et pour fournir un affichage de texte, comprenant :
- des moyens de réception vocale (2) intégrés à l'appareil domestique (100), configurés pour recevoir un signal vocal (SV) acoustique, correspondant à une expression vocale d'interrogation et/ou demande prononcée par l'utilisateur, et le transformer en un premier signal électrique (SE) correspondant représentatif du signal vocal (SV) acoustique ;
- des premiers moyens de traitement (3) intégrés à l'appareil domestique (100) et connectés fonctionnellement auxdits moyens de réception vocale (2) pour recevoir ledit premier signal électrique (SE), lesdits premiers moyens de traitement (3) étant configurés pour :
générer un signal électrique d'interrogation et/ou demande (SR), sur la base dudit premier signal électrique (SE), représentatif du signal vocal (SV) acoustique ;
- des seconds moyens de traitement (4), connectés fonctionnellement auxdits premiers moyens de traitement (3), lesdits seconds moyens de traitement (4) étant configurés pour :
- recevoir, depuis les premiers moyens de traitement (3), ledit signal électrique d'interrogation et/ou demande (SR) ;
- traiter ledit signal électrique d'interrogation et/ou demande (SR), pour identifier une interrogation et/ou demande d'utilisateur, dans lequel ladite étape du traitement du signal électrique d'interrogation et/ou demande (SR) comprend la reconnaissance si l'interrogation et/ou demande est ouverte ou fermée, dans lequel une interrogation et/ou demande est reconnue comme étant fermée si elle correspond à une interrogation et/ou demande déterminée, de sorte que les seconds moyens de traitement (4) soient capables de fournir une réponse unique prédéterminée relative à l'interrogation et/ou demande, sur la base d'informations et/ou d'états de l'appareil domestique qui sont accessibles par les seconds moyens de traitement (4), et dans lequel une interrogation et/ou demande est reconnue comme étant ouverte dans tous les cas dans lesquels ladite interrogation et/ou demande n'est pas reconnue comme étant fermée ;
- générer une première chaîne de caractères de texte (C1) correspondant à l'interrogation et/ou demande d'utilisateur identifiée à l'étape de traitement ;
- déterminer une réponse à fournir à l'utilisateur, sur la base de l'interrogation et/ou demande d'utilisateur identifiée, et générer une seconde chaîne de caractères de texte (C2) correspondant à la réponse déterminée ;
- transmettre ladite première chaîne de caractères de texte (C1) et ladite seconde chaîne de caractères de texte (C2) aux premiers moyens de traitement (2) de l'appareil domestique ;
- une interface visuelle (5) incluse dans l'appareil domestique (100), connectée fonctionnellement auxdits premiers moyens de traitement (3), ladite interface visuelle (5) étant configurée pour afficher ladite première chaîne de caractères de texte (C1) et ladite seconde chaîne de caractères de texte (C2), de sorte que l'utilisateur puisse lire à la fois l'interrogation et/ou demande d'utilisateur, telle qu'identifiée par les seconds moyens de traitement (4), et la réponse déterminée par les seconds moyens de traitement (4).

11. Système (1) selon la revendication 10, dans lequel les premiers moyens de traitement (3) et les seconds moyens de traitement (4) sont en outre configurés pour mettre en oeuvre une méthode selon l'une quelconque des revendications 2 à 9.

12. Système (1) selon la revendication 10 à 11, dans lequel l'interface visuelle (5) comprend un affichage (5) intégré à l'appareil domestique configuré pour afficher la première chaîne de caractères de texte (C1) et la seconde chaîne de caractères de texte (C2) sous forme de fenêtres contextuelles,
et dans lequel les seconds moyens de traitement (4) sont en outre configurés pour générer un signal de réponse de flux audio (SAR), correspondant à la réponse déterminée, et transmettre ledit signal de réponse de flux audio (SAR) aux premiers moyens de traitement (2) ; dans lequel le système (1) comprend en outre des moyens de génération de sortie vocale (7), intégrés à l'appareil domestique (100) et configurés pour reproduire le signal de réponse de flux audio (SAR) pour générer une sortie de réponse vocale.

13. Système selon l'une quelconque des revendications 10 à 12, dans lequel :
- les moyens de réception vocale (2) comprennent un ou plusieurs microphones ;
- les premiers moyens de traitement (3) comprennent un ou plusieurs circuits de traitement électroniques, et un ou plusieurs processeurs électroniques ;
et dans lequel le système (1) comprend en outre des moyens émetteurs-récepteurs (8) configurés pour transmettre ledit signal électrique d'interrogation ou demande (SR), dans lequel lesdits moyens de réception vocale (2), lesdits premiers moyens de traitement (3) et lesdits moyens de transmission (8) sont intégrés à un module de reconnaissance vocale (30) incorporé dans l'appareil domestique (100).

14. Système (1) selon l'une quelconque des revendications 10 à 13, dans lequel les seconds moyens de traitement (4) comprennent un ou plusieurs circuits de traitement électroniques, et/ou un ou plusieurs processeurs électroniques, agencés à distance de l'appareil domestique (100),
et dans lequel le système (1) comprend en outre des moyens de télécommunications (9) configurés pour connecter les moyens de transmission (8) de l'appareil domestique aux seconds moyens de traitement (4), dans lequel les seconds moyens de traitement (4) sont prévus dans une infrastructure en nuage (20), et dans lequel les moyens de télécommunications (9) comprennent des moyens de communication sans fil, un routeur et une infrastructure de télécommunication vers l'infrastructure en nuage (20).

15. Appareil domestique (100) comprenant une première partie (10) d'un système (1) selon l'une quelconque des revendications 10 à 14, comprenant au moins lesdits moyens de réception vocale (2), lesdits premiers moyens de traitement (3) et une interface visuelle (5),
ledit appareil domestique (100) étant connecté fonctionnellement à une seconde partie (20) d'un système (1) selon l'une quelconque des revendications 10 à 14 comprenant au moins lesdits seconds moyens de traitement (4).
